# EUROPÄISCHE PATENTSCHRIFT

(11) **EP 4 288 661 B1**
(45) Veröffentlichungstag und Bekanntmachung des Hinweises auf die Patenterteilung: **09.07.2025**
(21) Anmeldenummer: 22700836.4
(22) Anmeldetag: 18.01.2022
(51) Int. Cl.: F03G 7/08

(54) **RADGENERATOR**
WHEEL GENERATOR
GÉNÉRATEUR DE ROUE

(30) Priorität: 03.02.2021 EP 21154949; 20.08.2021 EP 21192439
(43) Veröffentlichungstag der Anmeldung: 13.12.2023
(73) Patentinhaber: KES-Tech-Group GmbH, 39171 Bahrendorf (DE)
(72) Erfinder: VON SCHUTTENBACH, Andreas, 85051 Ingolstadt (DE); KRAUS, Maik, 39104 Magdeburg (DE)
(74) Vertreter: Schiener, Jens
(86) Internationale Anmeldenummer: PCT/EP2022/051023
(87) Internationale Veröffentlichungsnummer: WO 2022/167214

(56) Entgegenhaltungen:
- WO-A1-2007/088627
- CN-A- 105 626 400
- US-A1- 2004 130 157

## Beschreibung

Die vorliegende Erfindung betrifft einen Radgenerator, nämlich einen Wandler zur Gewinnung von elektrischer Energie in einem rollenden Rad eines Fahrzeugs aus der Verformung des Radreifens durch Kontakt mit der Fahrbahn. Speziell betrifft die vorliegende Erfindung einen Wandler mit den Merkmalen des Oberbegriffs von Anspruch 1. Die vorliegende Erfindung betrifft ebenfalls ein System zur Gewinnung von elektrischer Energie, sowie ein Fahrzeug oder Rad umfassend das System.

### Stand der Technik

Fahrzeugreifen, insbesondere Luftreifen, werden beim Abrollvorgangs unter Belastung im Bereich der Auflagefläche verformt. Dabei wird der Reifen gewalkt und es entsteht ein Energieverlust bei der Kraftübertragung infolge von Erwärmung. Die dabei geleistete Arbeit wird Walkarbeit genannt.

Die benötigte Kraft für das Walken des Reifens ist eine Hauptkomponente des Rollwiderstandes und wirkt entgegen der Antriebskraft eines Fahrzeuges. Einerseits bewirkt eine erhöhte Walkarbeit also direkt einen erhöhten Kraftstoffverbrauch des Fahrzeuges und kann ferner auch die Lebensdauer des Reifens herabsetzen. Andererseits ist eine gewisse Verformung des Reifens und damit eine Erhöhung der Auflagefläche des Reifens auf dem Boden zwecks Erhöhung des Traktionskoeffizienten des Fahrzeuges und auch zwecks Erhöhung des Fahrkomforts durchaus erwünscht. Typischerweise wird daher der Luftdruck in einem Luftreifen als Kompromiss zwischen Walkarbeit und der Traktion des Fahrzeuges eingestellt.

Der Energieverlust durch Walkarbeit des Reifens ist neben dem Luftwiderstand eine der Hauptkomponenten des Gesamtenergieverlusts bei einem Fahrzeug. Insbesondere im Bereich der Elektroautos ist deshalb bereits seit einigen Jahren die Entwicklung von Systemen zur Rekuperation (Energierückgewinnung, insbesondere zur Versorgung der Fahrzeugbatterie) basierend auf einer Ausnutzung der Walkarbeit von Fahrzeugreifen von Interesse.

Im Stand der Technik sind verschiedene Verfahren und Systeme zur Energiegewinnung am oder im Fahrzeugreifen bekannt, hauptsächlich zur Versorgung diverser im Reifen angeordneter Reifenüberwachungssensoren mit elektrischer Energie, beispielsweise Reifendrucksensoren.

So ist aus der WO 2015/054763 A1 ein Generator in einem Reifen bekannt, bei dem unter Verwendung der geringen Verformung und Raumverringerung, die im inneren Teil des Reifens zwischen dem Rad und demselben auftritt, wenn er mit dem Boden in Kontakt steht, eine Hin- und Herbewegung erzeugt und eine Vorrichtung aktiviert wird, um den Generator zu drehen.

Weiterhin offenbart die EP 3 540 921 A1 einen Energiewandler zur Erzeugung von elektrischer Energie in einem rollenden Rad eines Fahrzeugs unter Ausnutzung der elastischen Verformung des Rades zwischen Fahrebene und Mittelachse des Rades. Der Energiewandler weist dabei ein Hebelelement mit einem um eine Drehachse drehbar gelagerten Ausleger auf, wobei das Hebelelement für eine derartige Anordnung in einem Rad für ein Fahrzeug konfiguriert ist, dass eine Verformung der Lauffläche hin zur Mittelachse des Rades eine auf eine Kontaktfläche des Auslegers wirkende Kraft erzeugt, und die auf die Kontaktfläche wirkende Kraft eine Drehbewegung des Auslegers in eine Pump-Drehrichtung um die Drehachse bewirkt.

Bei den im Stand der Technik bekannten Wandlern kommt es jedoch zwischen den Hebeln beziehungsweise Auslegern, die fest mit der Felge verbunden sind, zu einem direkten Kontakt mit dem Radreifen. Es hat sich gezeigt, dass bei höheren Geschwindigkeiten, unter Umständen bei einem typischen Autoreifen bereits ab ca. 50 km/h, es durch den direkten Kontakt der Hebel mit dem Radreifen zu einer deutlichen Erwärmung des Reifenmaterials an der Kontaktstelle, dessen Erweichung und Erhöhung der Klebrigkeit, zur Beschädigung des Reifens und dadurch schließlich zum Ausfall des Generators kommt.

Die US2004/0130157 A1 offenbart ein Radfahrzeug, das in seinen Reifen mechanische und vorzugsweise hydraulische Pumpen aufweist. Das Gewicht des Fahrzeugs pumpt beim Rollen der Reifen einen Vorratsbehälter auf. Der Druck im Vorratsbehälter wird verwendet, um das Fahrzeug direkt oder indirekt anzutreiben. Die Pumpen werden über Bügel angetrieben, die Rollen tragen. Diese treten mit eigens hierfür vorgesehenen Wülsten an der Reifeninnenseite in Kontakt.

Die WO2007088627 A1 offenbart einen weiteren Wandler zur Gewinnung von elektrischer Energie in einem rollenden Rad eines Fahrzeuges aus der Verformung des Radreifens durch Kontakt mit der Fahrbahn.

Bei sämtlichen im Stand der Technik bekannten Wandlern sind weiterhin die Hebelelemente in einem Winkel deutlich unter 45° zur Oberfläche der Reifeninnenseite angeordnet. Dies reduziert einerseits die Kräfte, die durch den direkten Kontakt der Hebel mit der Oberfläche der Reifeninnenseite an der Kontaktstelle auftreten. Andererseits wird dadurch jedoch die effektive Auslenkung der Hebelelemente, d.h. der Winkelbereich, den sie bei ihrer Bewegung überstreichen, reduziert.

### Offenbarung der Erfindung

Es ist Aufgabe der vorliegenden Erfindung, einen Wandler zur Gewinnung von elektrischer Energie in einem rollenden Rad eines Fahrzeugs aus der Verformung des Radreifens durch Kontakt mit der Fahrbahn zur Verfügung zu stellen, der die Probleme des Standes der Technik nicht aufweist, insbesondere einen zuverlässigen Betrieb auch bei höheren Geschwindigkeiten bei hohem Wirkungsgrad gewährleistet.

Diese Aufgabe wird gemäß der vorliegenden Erfindung gelöst mit einem Wandler zur Gewinnung von elektrischer Energie in einem rollenden Rad eines Fahrzeugs aus der Verformung des Radreifens durch Kontakt mit der Fahrbahn, umfassend mindestens ein Hebelelement, das an seinem ersten Ende drehbar gelagert ist, und an seinem zweiten Ende konfiguriert ist, mit der Innenseite eines Radreifens über mindestens ein Kontaktelement derart in Kontakt zu treten, dass eine Verformung des Radreifens durch Kontakt mit der Fahrbahn eine Drehbewegung des Hebelelements bewirkt, ein mechanisches Kopplungselement, das geeignet ist, die durch die Drehbewegung des Hebelelements auftretende Kraft zu übertragen, und mindestens einen elektrischen Generator, der konfiguriert ist, die, vorzugsweise durch das mechanisches Kopplungselement übertragene, Kraft in elektrische Energie umzuwandeln, wobei an dem zweiten Ende des Hebelelements das Kontaktelement um eine Rotationsachse derart in dem/an dem Hebelelement drehbar gelagert ist, dass das Kontaktelement den Kontakt des Hebelelements mit dem Radreifen vermittelt, wobei die Rotationsachse des Kontaktelements im Wesentlichen parallel zur Rotationsachse des Rades verläuft, und die Summe (A+B) des Abstands A der Drehachse N des Hebelelementes (1) von der Radmitte M und des Abstands B der Drehachse N von der Kontaktstelle K des Kontaktelementes mit der Innenseite des Radreifens, im Falle von mehreren Kontaktelementen pro Hebelelement die Kontaktstelle mit dem größten Abstand von der Drehachse N, im Verhältnis zum Radius der Innenseite des Radreifens R ((A+B)/R)) im Bereich von 102% bis 110% liegt. Vorteilhafte Ausgestaltungen sind Gegenstand der Unteransprüche.

Die Erfindung beruht auf der Erkenntnis, dass es bei den bekannten Generatoren bei deren Hebeln beziehungsweise Auslegern, die fest mit der Felge verbunden sind, bei deren direkten Kontakt mit dem Radreifen zu Reibung und folglich starker lokaler Wärmeentwicklung kommt. Bei seiner Walkbewegung vollführt der Radreifen eine bezüglich der Felge nichtlineare Bewegung, das heißt, ausgehend von der Felge als Bezugssystem ist die Bewegung eines definierten Teils der Radreifens, der mit der Fahrbahn in Kontakt kommt, bei einem Radumlauf nicht auf einer Geraden, sondern umbeschreibt eine Fläche. Bei lediglich drehbar gelagerten Hebeln beziehungsweise Auslegern kommt es somit bei einem Radumlauf zu einer Relativbewegung der entsprechenden Kontaktfläche des Radreifens und des in Kontakt tretenden Hebels beziehungsweise Auslegers, und somit zu Reibung zwischen diesen. Letztere scheint zum Ausfall der bekannten Generatoren, insbesondere bei höheren Geschwindigkeiten, bei einem typischen Autoreifen bereits ab ca. 50 km/h, zu führen. Weiterhin sind die Hebelelemente in einem Winkel deutlich unter 45° zur Oberfläche der Reifeninnenseite angeordnet. Dies reduziert einerseits die Kräfte und damit die Reibung, die durch den direkten Kontakt der Hebel mit dem Radreifen an der Kontaktstelle auftreten. Andererseits wird dadurch jedoch die effektive Auslenkung der Hebelelemente, d.h. der Winkelbereich, den sie bei ihrer Bewegung überstreichen, reduziert.

Erfindungsgemäß wurde nun überraschenderweise gefunden, dass dieses Problem mittels einer Kombination von Maßnahmen gelöst werden kann, nämlich dass einerseits mindestens ein Kontaktelement, typischerweise eine Rolle oder ein Teil einer Rolle (Rollensegment), an dem zweiten Ende des Hebelelementes derart drehbar gelagert ist, dass das Kontaktelement den Kontakt des Hebelelements mit dem Radreifen vermittelt, und die Rotationsachse des Kontaktelements im Wesentlichen parallel zur Rotationsachse des Rades verläuft. Das Kontaktelement ist an dem zweiten Ende des Hebelelementes um eine Rotationsachse drehbar gelagert und vermittelt den Kontakt des Hebelelementes mit dem Radreifen. Durch seine drehbare Lagerung ist es in der Lage, die Relativbewegung zwischen Radreifen und Hebelelement, über die eigene Rollbewegung, zu kompensieren und damit Reibung zwischen Radreifen und Hebelelement zu minimieren bzw. zu vermeiden. Andererseits wird die Auslenkung der Hebelelemente, d.h. der Winkelbereich, den sie bei ihrer Bewegung überstreichen, deutlich erhöht, wenn die Summe (A+B) des Abstands A der Drehachse N des Hebelelementes von der Radmitte M und des Abstand B der Drehachse N von der Kontaktstelle K des Kontaktelementes mit der Innenseite des Radreifens, im Falle von mehreren Kontaktelementen pro Hebelelement die Kontaktstelle mit dem größten Abstand von der Drehachse N, im Verhältnis zum Radius der Innenseite des Radreifens R ((A+B)/R)) im Bereich von 102% bis 110% liegt. Dieser Wertebereich für (A+B)/R bedeutet eine deutlich "gestrecktere" Anordnung der Hebelelemente in Vergleich zum Stand der Technik, sodass diese fast senkrecht gegenüber der Reifeninnenseite angeordnet sind. Dies erhöht zwar die Kräfte und die Relativbewegung zwischen Radreifen und Hebelelement, ermöglicht aber einen hohen Wirkungsgrad, da erst durch die Erhöhung des Winkelbereichs, den die Hebelelemente bei ihrer Bewegung überstreichen, ein effektiver Antrieb der Generatoren gewährleistet werden kann.

Die Erfindung wird nun in weiteren Einzelheiten anhand von bevorzugten Ausführungsformen beschrieben.

Der erfindungsgemäße Wandler zur Gewinnung von elektrischer Energie in einem rollenden Rad, wobei das Rad einen typischerweise mit Druckluft gefüllten Radreifen umfasst, eines Fahrzeugs aus der Verformung des Radreifens durch Kontakt mit der Fahrbahn, umfasst mindestens ein Hebelelement, das an seinem ersten Ende drehbar gelagert ist, und an seinem zweiten Ende derart konfiguriert ist, mit der Innenseite des Radreifens über mindestens ein Kontaktelement derart in Kontakt zu treten, dass eine Verformung des Radreifens durch Kontakt mit der Fahrbahn eine Drehbewegung des Hebelelements bewirkt.

Unter der Drehbewegung des Hebelelements ist typischerweise eine Teildrehung (Schwenkbewegung) des Hebelelements um die Drehachse N am ersten Ende zu verstehen. Das Hebelelement ist also insbesondere speziell darauf ausgelegt, im Rahmen des Abrollvorgangs des belasteten auf einer im Wesentlichen ebenen Fahrebene rollenden Rads entstehende Verformungen des Radreifens im Bereich der Auflagefläche mittels der Kontaktelementes zu erfassen und in eine Drehbewegung um die Drehachse N am ersten Ende des Hebelelements zu übertragen. Das Hebelelement hat somit selbst keinen Kontakt zur Reifeninnenseite, sondern steht lediglich über das mindestens eine Kontaktelement mit dieser in Kontakt. Gemäß einer Ausführungsform des Wandlers ist dieser bzw. das Hebelelement also derart konfiguriert, dass die Kontaktfläche des Kontaktelementes des Hebelelements ausgelegt ist zur Herstellung eines Kontakts mit einer Reifeninnenfläche des Rades.

Das Hebelelement ist an seinem ersten Ende drehbar gelagert, vorzugsweise an der Trägerstruktur bzw. der Felge des Rades. Grundsätzlich kann die Drehachse N am ersten Ende des Hebelelements jedwede Richtung aufweisen, die im Wesentlichen parallel zu dessen entsprechender Kontaktfläche an der Innenseite des Radreifens verläuft, da somit die Walkbewegung der Innenseite des Radreifens, also ein Bewegung auf die Felge zu, zu einer Teildrehung des Hebelelementes führen kann. In einer bevorzugten Ausführungsform verläuft die Drehachse des Hebelelements im Wesentlichen parallel zur Rotationsachse des Rades.

Im Wesentlichen parallel bedeutet im Rahmen der vorliegenden Erfindung vorzugsweise eine Abweichung von der Parallelen von unter 10°, mehr bevorzugt unter 5°.

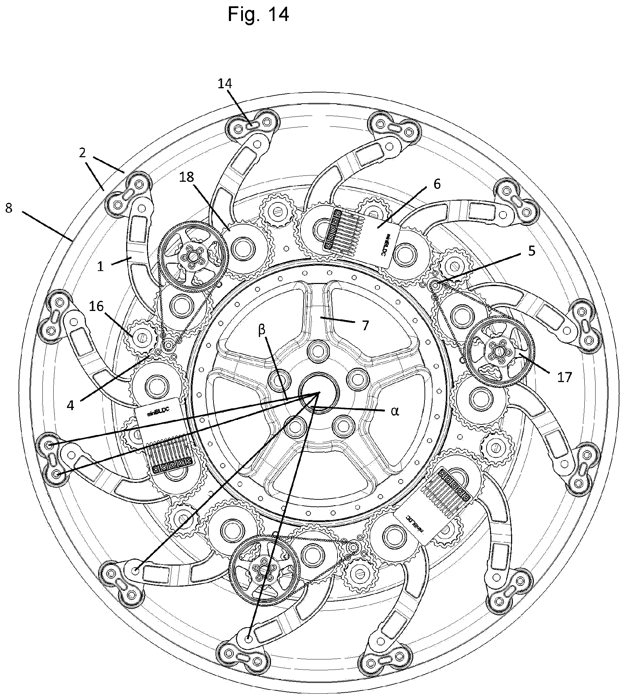

In einer bevorzugten Ausführungsform ist das Hebelelement einstückig. In dieser trägt es vorzugsweise ein, insbesondere nur ein, Kontaktelement, das an diesem drehbar gelagert ist. In einer alternativen ebenfalls bevorzugten Ausführungsform ist das Hebelelement mindestens zweigeteilt, das heißt besteht aus mindestens zwei, vorzugsweise nur zwei, Teilen, die mechanisch verbunden sind, vorzugsweise teilweise gegeneinander drehbar. Beispielsweise bildet der erste Teil des Hebelelementes das erste Ende, an dem das Hebelelement drehbar gelagert ist, der zweite Teil stellt das zweite Ende dar, welches das Kontaktelement/die Kontaktelemente trägt. Die Teildrehbarkeit des ersten Teils gegenüber dem zweien Teil erlaubt den Ausgleich der Drehbewegung (Wippbewegung) des Hebelelementes beim Kontakt der Kontaktelemente mit der Reifeninnenseite des gewalkten Reifens und gleichzeitige Beibehaltung des Kontaktes der Kontaktelemente mit der Reifeninnenseite. In dieser alternativen Ausführungsform trägt das Hebelelement vorzugsweise mindestens zwei, insbesondere nur zwei, Kontaktelemente, die an diesem, insbesondere dem zweiten Teil, drehbar gelagert sind. Besonders bevorzugt besteht in der alternativen Ausführungsform das Hebelelement somit aus einem ersten Teil mit dem ersten Ende, und dem zweiten Teil, das ein Halteelement für mindestens zwei, vorzugsweise zwei Kontaktelemente darstellt, somit vorzugsweise einen Rollenschlitten darstellt. Letzterer ist so konfiguriert, dass beide Kontaktelemente gleichzeitig mit der Innenseite des Radreifens (Oberfläche der Reifeninnenseite) in Kontakt treten können. Auf diese Weise kann die Kontaktfläche auf der Innenseite des Radreifens erhöht, und damit die Punktkraft und somit die Punktbelastung des Radreifens verringert werden. Der zweite Teil (im Folgenden auch als "Schlitten" bezeichnet) ist derart teildrehbar am Hebelelement gelagert, dass beim "Ausklappen" des Hebelelementes, z.B. aus der Ruhestellung, ein Kontakt aller Kontaktelemente, die der Schlitten trägt, mit dem Radreifen ermöglicht wird. In einer bevorzugten Ausführungsform ist der Abstand der Drehachsen der Kontaktelemente, die der (jeder) Schlitten trägt, in etwa gleich (±10%, bevorzugt ±5%) des Abstandes der Drehachsen zweier benachbarter Kontaktelemente zweiter (unmittelbar) benachbarter Hebelelemente, wenn die Kontaktelemente an der Innenseite des Radreifens anliegen. Beispielsweise ist vorzugsweise der Abstand der Drehachsen zweiter Kontaktelemente, die jeder der Schlitten der vorzugsweise 8 oder 12 Hebelelemente, in etwa gleich (±10%, bevorzugt ±5%) des Abstandes der Drehachsen eines Kontaktelementes eines ersten Schlittens zur Drehachse des nächstliegenden Kontaktelementes des (unmittelbar) benachbarten Schlittens. Anders ausgedrückt ist vorzugsweise der Winkel β, den die beiden Drehachsen der Kontaktelemente eines Schlittens bezogen auf die Drehachse des Rades aufspannen, in etwa 360°/2*n, wobei n die Anzahl der Hebelelemente bzw. Schlitten ist. Der Winkel β, den die beiden Drehachsen der Kontaktelemente eines Schlittens bezogen auf die Drehachse des Rades vorzugsweise aufspannen, ist also in etwa (±10%, bevorzugt ±5%) die Hälfte des Winkels α zwischen zwei Hebelelementen. Der Winkel α ist der Winkel, den die Drehachsen zweier benachbarte Hebelelemente (oder wie in der Figur 14 gezeigt, bei gleicher Stellung der Hebelelemente, auch die Drehachsen der Schlitten) bezogen auf die Drehachse des Rades aufspannen. Der Winkel α entspricht somit 360°/n, wobei n die Anzahl der Hebelelemente ist. In dieser Ausführungsform ist die Kraftverteilung gleichmäßig über den Radreifen (Oberfläche der Reifeninnenseite) verteilt, da die Kontaktelement in etwa in gleichem Abstand den Radreifen kontaktieren. Bei 12 Hebelelementen und je zwei Rollen pro Schlitten stehen somit 24 etwa gleich (±10%, bevorzugt ±5%) beabstandete Kontaktelemente mit der Reifeninnenseite in Kontakt (der Winkel β ist zwischen jeweils benachbarten Kontaktelementen, sowohl zweier Kontaktelement eines Schlittens als auch die jeweils benachbarten Kontaktelemente zweier benachbarter Schlitten, ist dann in etwa 15° (±10%, bevorzugt ±5%)). Über die Reifeninnenseite in etwa gleich und damit gleichmäßig beabstandete Kontaktelemente führen auch zu einer gleichmäßigeren Energieübertragung auf die Hebelelemente, da hierdurch bei typischen Walkverformungen, etwa von PKW oder LKW-Reifen, gleichzeitig immer mindestens zwei Hebelelemente über ihre Schlitten eine Auslenkung erfahren.

In einer Ausführungsform werden die, vorzugsweise zwei, Kontaktelemente eines Schlittens, vorzugsweise wenn sie als Rollen ausgeführt sind, von einem Riemen oder Band umspannt bzw. umlaufen. Der Riemen oder das Band läuft beispielsweise direkt um beide Rollen, oder zusätzlich um eine Umlenkrolle, die ebenfalls am Schlitten angeordnet sein kann. Die umspannten Kontaktelemente, vorzugsweise Rollen, treten dabei über den Riemen bzw. das Band mit der Reifeninnenseite in Kontakt. Dies vergrößert die effektive Kontaktfläche der Kontaktelemente mit der Reifeninnenseite und verringert damit die Punktlast und somit die Belastung des Reifens. Der Riemen kann beispielsweise als Keilriemen oder Keilrippenriemen ausgeführt sein, um ein Ablaufen von den Rollen zu vermeiden.

In einer bevorzugten Ausführungsform weist der Wandler mindestens zwei rotationssymmetrisch um die Rotationsachse des Rades angeordnete Hebelelemente auf, insbesondere mindestens 6 bis 16, am meisten bevorzugt 8 bis 12.

Das Hebelelement des erfindungsgemäßen Wandlers umfasst mindestens ein Kontaktelement. Über Letzteres tritt das Hebelelement mit der Innenseite des Reifens in Kontakt, so dass eine Verformung des Radreifens durch Kontakt mit der Fahrbahn eine (Teil-)Drehbewegung des Hebelelements bewirkt. Das heißt, das Hebelelement weist an dem zweiten Ende mindestens ein Kontaktelement derart in bzw. an dem Hebelelement drehbar gelagert auf, dass das Kontaktelement den Kontakt des Hebelelements mit dem Radreifen vermittelt.

Vorzugsweise tritt das Hebelelement in keiner Stellung der Rotation um seine Drehachse N an dessen ersten Ende (unter Normalbetrieb) direkt mit der Innenseite das Radreifens in Kontakt, das heißt berührt diesen nicht. Vielmehr tritt lediglich das Kontaktelement/die Kontaktelemente mit der Innenseite das Radreifens in Kontakt, das heißt berührt diesen, sofern das Hebelelement sich entsprechend um die Drehachse am ersten Ende Richtung Reifenoberfläche gedreht hat (von der Felge weg). Die Rotationsachse des Kontaktelements/der Kontaktelemente ist im Wesentlichen parallel zur Rotationsachse des Rades. Bei Anwesenheit von mehr als einem Kontaktelement an einem Hebelelement sind deren Rotationsachsen parallel angeordnet. Die Möglichkeit, dass das Kontaktelement einerseits drehbar am Hebelelement gelagert ist und andererseits sich um eine Achse, die im Wesentlichen parallel zur Rotationsachse des Rades liegt, drehen kann, ermöglicht es, dass die Relativbewegung zwischen Radreifen und Hebelelement kompensiert wird und damit Reibung zwischen Radreifen und Hebelelement minimiert wird. Vorzugsweise ist das Kontaktelement bezüglich dessen Abmessungen, zumindest in dem Bereich, der mit der Innenseite des Radreifens in Kontakt tritt, im Wesentlichen bezüglich seiner Rotationsachse rotationssymmetrisch. Insbesondere handelt es sich somit um eine Rolle bzw. Teilrolle (Rollensegment). Die Rolle hat im Wesentlichen ein Zylinderform (die Rotationsachse des Kontaktelementes entspricht dann der Zylinderachse), gegebenenfalls mit kreisförmig nach außen gewölbter Zylindermantelfläche (tonnenförmige Rolle). Typische geeignete Radien des Kontaktelementes, also vorzugsweise Rollenradien, sind solche, bei denen das Verhältnis Radius des Kontaktelementes zu Radius der Innenseite des Radreifens R (um die Radmitte) im Bereich von 0,04 bis 0,08, vorzugsweise 0,05 bis 0,07 liegt. Typische geeignete Rollenradien, insbesondere für einen PKW-Reifen, liegen damit im Bereich von 18 mm bis 30 mm. Vorzugsweise ist das Kontaktelement bezüglich seiner Rotationsachse frei drehbar, insbesondere frei um 360° drehbar. Das heißt, das Kontaktelement kann sich vorzugsweise frei um die Drehachse, um die es drehbar am/im Hebelelement, bzw. im Schlitten, gelagert und befestigt ist, drehen, insbesondere vollständig um die eigene Achse. Dies stellt während des Betriebes auch bei höheren Geschwindigkeiten einen gleichmäßigen Kontakt des Kontaktelementes mit der Innenseite des Radreifens sicher.

Das Verhältnis des Abstands A der Drehachse des Hebelelementes N von der Radmitte M zum Radius der Innenseite des Radreifens R (A/R) ist im Bereich von 0,55 bis 0,60, vorzugsweise 0,56 bis 0,59.

Das Verhältnis des Abstand B der Drehachse des Hebelelementes N von der Kontaktstelle K des Kontaktelementes mit der Innenseite des Radreifens (im Falle von mehreren Kontaktelementen pro Hebelelement das mit dem größten Abstand von der Drehachse N) zum Radius der Innenseite des Radreifens R (B/R) ist im Bereich von 0,44 bis 0,55, vorzugsweise 0,45 bis 0,53, insbesondere 0,46 bis 0,50.

Im erfindungsgemäße Wandler kann das Hebelelement, das an seinem ersten Ende drehbar gelagert ist, mit der Innenseite des Radreifens über das mindestens eine Kontaktelement in Kontakt treten. Das bedeutet, die Summe des Abstands A der Drehachse des Hebelelementes N von der Radmitte M und des Abstand B der Drehachse N von der Kontaktstelle K des Kontaktelementes mit der Innenseite des Radreifens (im Falle von mehreren Kontaktelementen pro Hebelelement ist die Kontaktstelle die mit dem größten Abstand von der Drehachse N) (A+B) beträgt mehr als der Radius der Innenseite des Radreifens R. Das Verhältnis von A+B zum Radius der Innenseite des Radreifens R ((A+B)/R)) ist erfindungsgemäß im Bereich von 102% bis 110%, insbesondere 103% bis 107%.

Der Radius R bezieht sich hier immer auf den Radius des unbelasteten Reifen von Radmitte bis zur Innenseite des Radreifens (Oberfläche der Reifeninnenseite). Drehachse des Hebelelementes N bezieht sich auf die Drehachse des Hebelelementes an dessen ersten Ende.

Der erfindungsgemäße Wandler umfasst ferner ein mechanisches Kopplungselement. Dieses ist konfiguriert und geeignet, die durch die Drehbewegung des Hebelelements auftretende Kraft zu übertragen, und zwar vorzugsweise zu dem Generator / den Generatoren. Typische geeignete mechanische Kopplungselemente sind Zahnräder und Achsen, Riemen, Ketten und dergleichen. Bevorzugt umfasst das mechanische Kopplungselement mindestens einen Ring mit Außen- oder Innenverzahnung, eine Kette oder Riemen, insbesondere Zahnriemen und/oder Keilrippenriemen. Bevorzugt wird die Kraft aller Hebelelemente des Wandlers auf ein gemeinsames mechanisches Kopplungselement, beispielsweise einen Ring mit Außen- oder Innenverzahnung, eine Kette oder einen Riemen, insbesondere Zahnriemen und/oder Keilrippenriemen, übertragen. Letzteres mechanisches Kopplungselement steht somit in Kraftschluss mit allen Hebelelementen des Wandlers. Dies erlaubt ein kontinuierlicheres antreiben des/der Generatoren. Vorzugsweise steht das mechanisches Kopplungselement auch mit allen Generatoren in Kraftschluss. Durch verteilen der gesamten durch die Hebelelemente gewonnen Energie auf mehrere Generatoren können diese kontinuierlich betrieben werden, was eine effiziente Energierückgewinnung bei minimalem Materialeinsatz erlaubt.

In einer bevorzugen Ausführungsform umfasst der Wandler ein mechanisches Kopplungselement, das als Riemen, insbesondere Keil-, Zahn- oder Keilrillenriemen ausgeführt ist, und der Kraftschluss aller Hebelelementen, vorzugsweise 8 oder insbesondere 12, des Wandlers mit allen Generatoren, vorzugsweise drei, herstellt. Hierbei ist bevorzugt, dass der Riemen um entweder jeweils eine Rolle, die mit einem Hebelelement verbunden ist, und jeweils abwechselnd ein Freilaufrolle (Umlenkrolle) oder eine Rolle, die mit einem Generator verbunden ist (Generatorantriebsrolle), geführt wird. Alternativ wird der Riemen, was besonders bevorzugt ist, über jeweils zwei Rollen, die mit jeweils einem (unmittelbar) benachbarten Hebelelement verbunden sind, gefolgt von einer Freilaufrolle oder alternierend eine Rolle, die mit einem Generator verbunden ist, geführt. In letzterer Ausführungsform läuft der Riemen somit am meisten bevorzugt über 12 Rollen, die mit jeweils einem Hebelelement verbunden sind, drei Freilaufrollen und drei Rollen, die mit einem Generator verbunden sind.

Schließlich umfasst der erfindungsgemäße Wandler mindestens einen elektrischen Generator, der konfiguriert ist, die durch die Drehbewegung des/der Hebelelemente(s) gewonnene, vorzugsweise durch das mechanisches Kopplungselement übertragene, Kraft in elektrische Energie umzuwandeln. In einer bevorzugten Ausführungsform weist der Wandler mindestens zwei rotationssymmetrisch um die Rotationsachse des Rades angeordnete Generatoren auf, insbesondere mindestens 2 bis 12, am meisten bevorzugt 3 bis 8, beispielsweise drei oder vier. Vorzugsweise entspricht die Anzahl der Hebelelemente ein Vielfaches der Anzahl der Generatoren.

Typischerweise wird der Rotor des Generators über das mechanisches Kopplungselement bewegt, der Stator ist mit dem Trägerelement/der Felge des Rades verbunden. Vorzugsweise werden alle Generatoren über das mechanisches Kopplungselement gleichzeitig angetrieben.

Alternativ wird der Rotor des Generators über direkte Kopplung mit den Hebelelementen, beispielsweise über die Freilaufkupplung oder ein an dieses befestigtes oder gekoppeltes Anschlusselement, beispielsweise ein Anschlussrad, bewegt, der Stator ist mit dem Trägerelement/der Felge des Rades verbunden. In dieser Ausführungsform wird die Kraft der Hebelelemente durch das mechanisches Kopplungselement zu allen Freilaufkupplungen der Hebelelemente, und über diese auf die Generatoren, vorzugsweise alle Generatoren gleichzeitig, übertragen, und diese dadurch angetrieben.

Damit der elektrische Generator beispielsweise bereits durch relativ geringe Auslenkungen eines Hebelelements und damit geringe Bewegung des mechanischen Kopplungselements dennoch mit geeigneten Drehzahlen angetrieben werden kann, weist der Wandler, vorzugsweise über das mechanische Kopplungselement, gemäß einer weiteren bevorzugten Ausführungsform ein Getriebe bzw. eine Übersetzung auf, vorzugsweise pro Generator, konfiguriert zum Erzeugen einer definierten Übersetzung zwischen der (Teil-)Drehbewegung des Hebelelements und einer Drehbewegung des Rotors des Generators. Zum Beispiel ist das Getriebe und/oder die Übersetzung dabei konfiguriert, zwischen der Drehbewegung des Hebelelements und der Drehbewegung des Rotors eine Übersetzung hin zu höheren Drehzahlen des Rotors zu erzeugen, insbesondere eine Übersetzung von einem Verhältnis 1 zu 2 bis 1 zu 10. Zusätzlich oder alternativ kann eine entsprechende Übersetzung durch den Kraftschluss zwischen Hebelelement und mechanischen Kopplungselement und/oder zwischen mechanischem Kopplungselement und Generator gewährleistet werden. Vorzugsweise wird lediglich mittels Übersetzung zwischen Hebelelement und mechanischen Kopplungselement und/oder zwischen mechanischem Kopplungselement und Generator eine entsprechende geeigneten Drehzahl des Generators gewährleistet.

Um eine kontinuierliche Bewegung und damit Kraftübertragung des mechanischen Kopplungselements zu gewährleisten ist es bevorzugt, dass der bzw. die Hebelelemente die Kraft über eine Freilaufkupplung, das heißt eine drehrichtungsabhängige Kupplung, beispielsweise auf das mechanische Kopplungselement übertragen. So weist der Wandler vorzugsweise pro Hebelelement eine Freilaufkupplung auf, konfiguriert zur drehrichtungsabhängigen Kupplung, d.h. aufweisend eine Kupplungsrichtung zur Herstellung einer wirkenden Kupplung und eine Freilaufrichtung. Typischerweise ist die Freilaufkupplung so konfiguriert, dass der Kraftschluss bei Bewegung des Hebelelementes in Richtung zur Rotationsachse des Rades hin erfolgt, und entsprechend der Freilauf bei Bewegung des Hebelelementes von der Rotationsachse des Rades weg. Das Hebelelement, die Freilaufkupplung, das mechanische Kopplungselement und der elektrische Generator sind vorzugsweise derart angeordnet und konfiguriert, dass die Drehbewegung des Hebelelement über die Freilaufkupplung in Kupplungsrichtung über das mechanische Kopplungselement auf den Rotor des elektrischen Generators übertragen und vom elektrischen Generator in elektrische Energie gewandelt wird.

Gemäß einer weiteren bevorzugten Ausführungsform weißt der erfindungsgemäße Wandler ein Vorspannmittel für das/die Hebelelement(e) auf, insbesondere eine Feder, das die Drehung des Hebelelements um ihr erstes Ende mit einer Kraft in die durch die Verformung des Radreifens durch Kontakt mit der Fahrbahn verursachte Drehbewegung der Hebelelemente, das heißt in Richtung Drehung des Hebelelementes hin zur Rotationsachse des Rades, vorspannt. Das Vorspannelement stellt sicher, dass das/die Hebelelement(e) bei Stillstand des Rades bzw. lediglich geringen Drehzahlen des Rades nicht mit dem Radreifen in Kontakt stehen, das heißt, in einem "zurückgezogenen" Zustand verbleiben. Letzteres vereinfacht die Reparatur des Rades und den Reifenwechsel auf dem Rad. Das Vorspannmittel ist dann zweckmäßig so konfiguriert, dass ab geeigneten Drehzahlen des Rades eine Bewegung des Hebelelementes von der Rotationsachse des Rades weg erlaubt wird (die Zentrifugalkraft also die Vorspannkraft übersteigt) und das Kontaktelement des Hebelelementes mit dem Radreifen in Kontakt kommen kann. Vorzugsweise ist das Vorspannmittel so konfiguriert, dass ab Drehzahlen des Rades von mindestens 100 U/min, mehr bevorzugt mindestes 120 U/min, eine Bewegung des Hebelelementes von der Rotationsachse des Rades weg erlaubt wird. Typische Drehzahlen sind etwa 125 U/min, was einer Geschwindigkeit von etwa 15 km/h (beim PKW) entspricht.

Um zu vermeiden, dass durch übermäßige Stöße und/oder übermäßige Verformungen der Lauffläche des Rades auf die Hebelelement wirkende Kräfte den Wandler bzw. dessen Bestandteile beschädigen, ist vorzugsweise ein entsprechender Schutzmechanismus vorgesehen, insbesondere ein Überlastschutz. So handelt es sich vorzugsweise bei den Freilaufkupplungen, den Kupplungen innerhalb oder zum mechanischen Kopplungselement und/oder die Kupplungen zu den Generatoren um Sicherheitskupplungen mit Überlastschutz, die beim Überschreiten von definierten Maximalkräften ein Drehung ohne effektive Kupplung erlauben.

Die vorliegende Erfindung betrifft ferner ein System zur Gewinnung von elektrischer Energie in einem rollenden Rad eines Fahrzeugs aus der Verformung des Radreifens durch Kontakt mit der Fahrbahn, umfassend einen Wandler wie oben beschrieben sowie einem Trägerelement/eine Radfelge als Trägerstruktur. In einer bevorzugten Ausführungsform ragen die Hebelelemente einschließlich Kontaktelemente nicht über die Felgenhörner, das heißt über die Mantelfläche eines durch die Felgenhörner definierten Zylinders, hinaus.

In einer Ausführungsform weist das System einen wie oben beschriebenen Wandler sowie eine Trägerstruktur auf, wobei die Trägerstruktur typischerweise so konfiguriert ist, den Energiewandler in einer fixen Anordnung um die Mittelachse des Rades zu halten. Insbesondere kann die Trägerstruktur selber als Felge des Rades ausgebildet oder in diese integriert sein, oder das System weist eine - speziell für eine Kombination mit der Trägerstruktur vorgesehene - Felge auf, konfiguriert für eine fixierte Aufnahme der Trägerstruktur. Vorzugsweise ist die Felge einteilig.

Gemäß einer weiteren Ausführungsform weist das System eine mehrteilige Felge auf, was die Montage des Wandlers bzw. der Trägerstruktur im Rad vereinfachen kann. Zum Beispiel ist die mehrteilige Felge ausgebildet als eine zweiteilige Felge mit einem Felgenbett und einer Felgenhülse oder als eine dreiteilige Felge mit einem Felgenbett, einer Felgenhülse und einem Felgenstern. In dem Fall können der Wandler bzw. die Trägerstruktur und die mehrteilige Felge beispielsweise konfiguriert sein, dass der Wandler bzw. die Trägerstruktur auf ein Felgenbett der mehrteiligen Felge montiert ist.

Schließlich betrifft die vorliegende Erfindung ein Landfahrzeug, vorzugsweise ein Kraftfahrzeug oder einen Lastkraftwagen, oder ein Rad, umfassend ein System wie oben beschrieben.

Die Erfindung wird nun anhand der Zeichnungen beschrieben.
Figur 1 zeigt eine schematische Seitenansicht eines erfindungsgemäßen Wandlers.
Figur 2 zeigt eine schematische Seitenansicht eines erfindungsgemäßen Wandlers.
Figur 3 zeigt eine schematische Seitenansicht eines erfindungsgemäßen Wandlers.
Figur 4 zeigt eine schematische Seitenansicht eines erfindungsgemäßen Wandlers.
Figur 5 zeigt eine isometrische Ansicht eines Hebelelementes einschließlich Kontaktelement.
Figur 6 zeigt eine isometrische Ansicht eines Hebelelementes einschließlich Kontaktelement.
Figur 7 zeigt eine isometrische Ansicht eines erfindungsgemäßen Wandlers mit Hebelelementen mit einem Kontaktelement mit Felge mit Reifen.
Figur 8 zeigt eine isometrische Ansicht eines erfindungsgemäßen Wandlers mit Hebelelementen mit einem Kontaktelement mit Felge mit Reifen.
Figur 9 zeigt eine isometrische Ansicht eines erfindungsgemäßen Wandlers mit Hebelelementen mit jeweils zwei Kontaktelementen.
Figur 10 zeigt eine isometrische Ansicht eines erfindungsgemäßen Wandlers mit Hebelelementen mit jeweils zwei Kontaktelementen.
Figur 11 illustriert die Verhältnisse der Abstände der Drehachse des Hebelelementes N von der Radmitte M und der Kontaktstelle K.
Figur 12 illustriert drei Ausführungsformen des Hebelelementes.
Figur 13 zeigt eine schematische Seitenansicht eines erfindungsgemäßen Wandlers mit Hebelelementen mit jeweils zwei Kontaktelementen.
Figur 14 zeigt eine schematische Seitenansicht eines erfindungsgemäßen Wandlers mit Hebelelementen mit jeweils zwei Kontaktelementen.

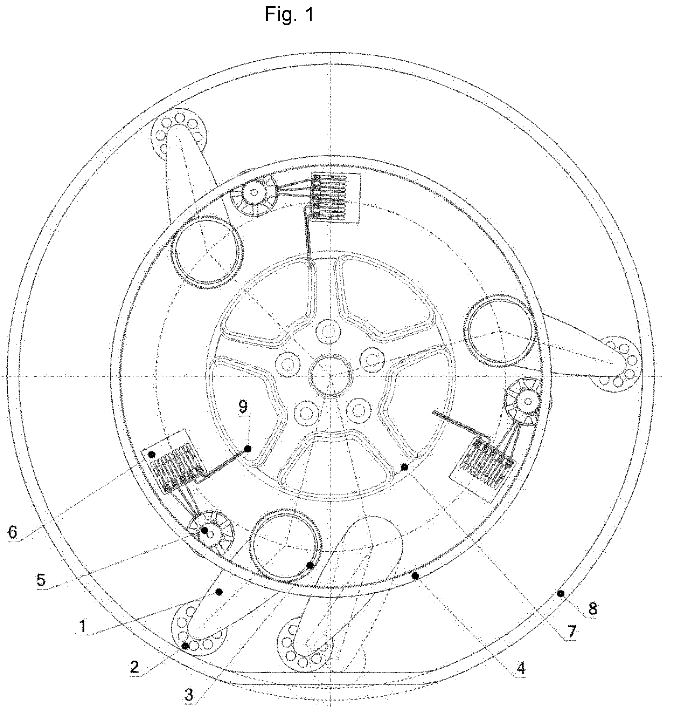

Ein erfindungsgemäßer Wandler wird in Figur 1 gezeigt, der Hebelelemente 1 einschließlich Kontaktelementen 2, hier Rollen, umfasst. Durch die Verformung des Reifens 8 durch den Kontakt mit der Fahrbahn wird das Hebelelement, dass an der Reifeninnenseite des Reifens 8 im Bereich des Kontakt mit der Fahrbahn über das Kontaktelement anliegt, teilweise um die Drehachse an seinem ersten Ende gedreht, wie in Figur 1 unten angedeutet. Die auftretende Kraft wird über die Freilaufkupplung 3 und das mechanische Kopplungselement 4, hier als freischwimmender Zentralring mit Innenverzahnung ausgeführt, an den Generator 5 übertragen. Die erzeugte elektrische Energie wird über den Controller 6 über den Anschluss für Leistungsabgabe 9 ins Fahrzeug geführt. Typische erfindungsgemäße Anschlüsse sind Leitungen, Schleifkontakte (Bürsten) oder elektromagnetische Übertragung. Die Hebelelemente 1 sind rotationssymmetrisch um die Felge 7 angeordnet.

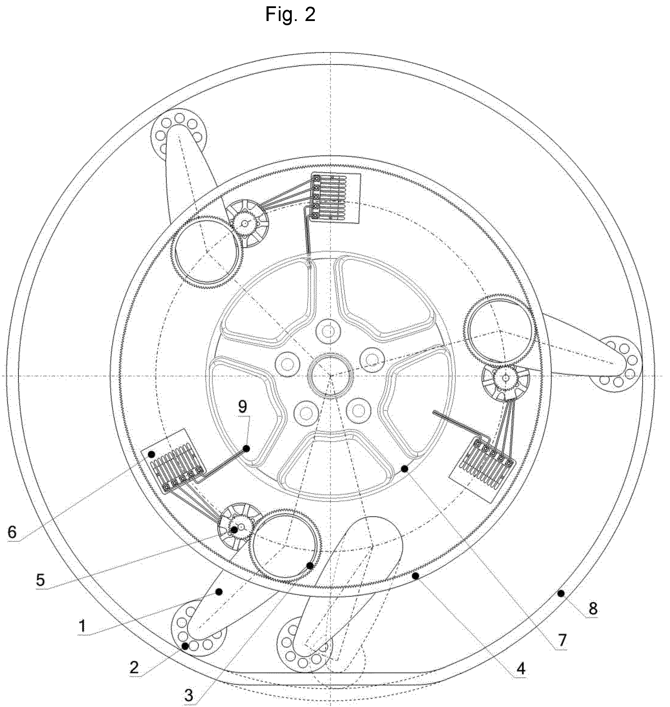

Ein alternativer erfindungsgemäßer Wandler wird in Figur 2 gezeigt, der Hebelelemente 1 einschließlich Kontaktelementen 2, hier Rollen, umfasst. Durch die Verformung des Reifens 8 durch den Kontakt mit der Fahrbahn wird das Hebelelement, dass an der Reifeninnenseite des Reifens 8 im Bereich des Kontakt mit der Fahrbahn über das Kontaktelement anliegt, teilweise um die Drehachse an seinem ersten Ende gedreht, wie in Figur 2 unten angedeutet. Die auftretende Kraft wird einerseits über die Freilaufkupplung 3 direkt an einen Generator 5 übertragen, sowie über das mechanische Kopplungselement 4 auf die anderen Freilaufkupplungen sowie die Generatoren. Die erzeugte elektrische Energie wird über den Controller 6 über den Anschluss für Leistungsabgabe 9 ins Fahrzeug geführt. Die Hebelelemente 1 sind rotationssymmetrisch um die Felge 7 angeordnet.

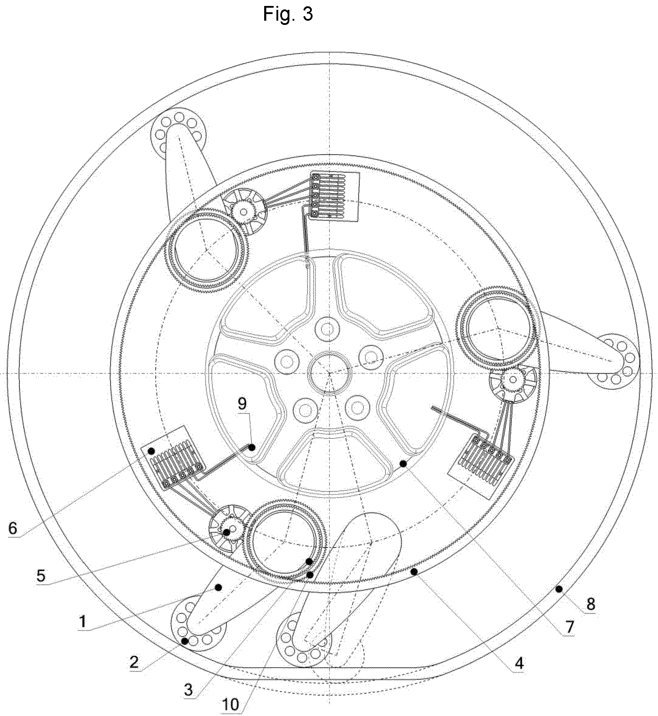

Ein alternativer erfindungsgemäßer Wandler wird in Figur 3 gezeigt, der Hebelelemente 1 einschließlich Kontaktelementen 2, hier Rollen, umfasst. Durch die Verformung des Reifens 8 durch den Kontakt mit der Fahrbahn wird das Hebelelement, dass an der Reifeninnenseite des Reifens 8 im Bereich des Kontakt mit der Fahrbahn über das Kontaktelement anliegt, teilweise um die Drehachse an seinem ersten Ende gedreht, wie in Figur 3 unten angedeutet. Die auftretende Kraft wird einerseits über die Freilaufkupplung 3 und ein Anschlussrad mit Außenverzahnung 10 an einen Generator 5 übertragen, sowie über das mechanische Kopplungselement 4 auf die anderen Freilaufkupplungen sowie die Generatoren. Die erzeugte elektrische Energie wird über den Controller 6 über den Anschluss für Leistungsabgabe 9 ins Fahrzeug geführt. Die Hebelelemente 1 sind rotationssymmetrisch um die Felge 7 angeordnet.

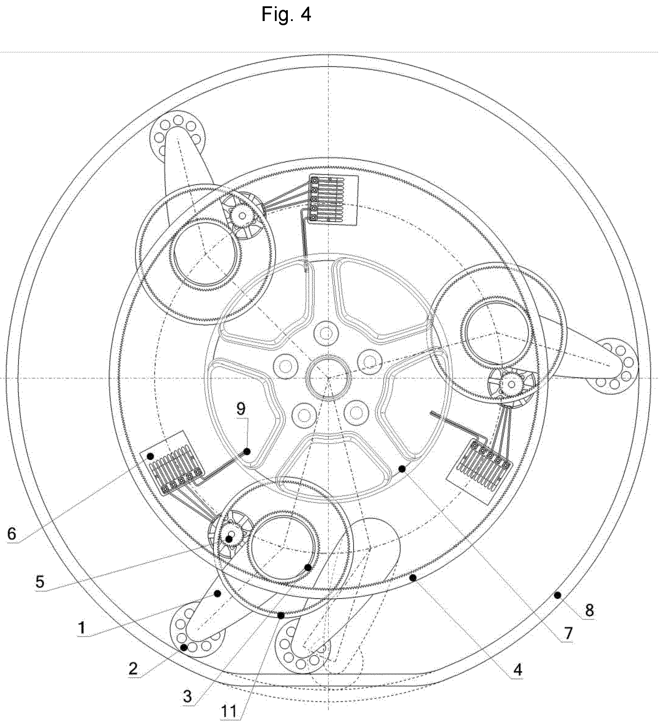

Ein alternativer erfindungsgemäßer Wandler wird in Figur 4 gezeigt, der Hebelelemente 1 einschließlich Kontaktelementen 2, hier Rollen, umfasst. Durch die Verformung des Reifens 8 durch den Kontakt mit der Fahrbahn wird das Hebelelement, dass an der Reifeninnenseite des Reifens 8 im Bereich des Kontakt mit der Fahrbahn über das Kontaktelement anliegt, teilweise um die Drehachse an seinem ersten Ende gedreht, wie in Figur 4 unten angedeutet. Die auftretende Kraft wird einerseits über die Freilaufkupplung 3 und ein Anschlussrad mit Innenverzahnung 11 an einen Generator 5 übertragen, sowie über das mechanische Kopplungselement 4 auf die anderen Freilaufkupplungen sowie die Generatoren. Die erzeugte elektrische Energie wird über den Controller 6 über den Anschluss für Leistungsabgabe 9 ins Fahrzeug geführt. Die Hebelelemente 1 sind rotationssymmetrisch um die Felge 7 angeordnet.

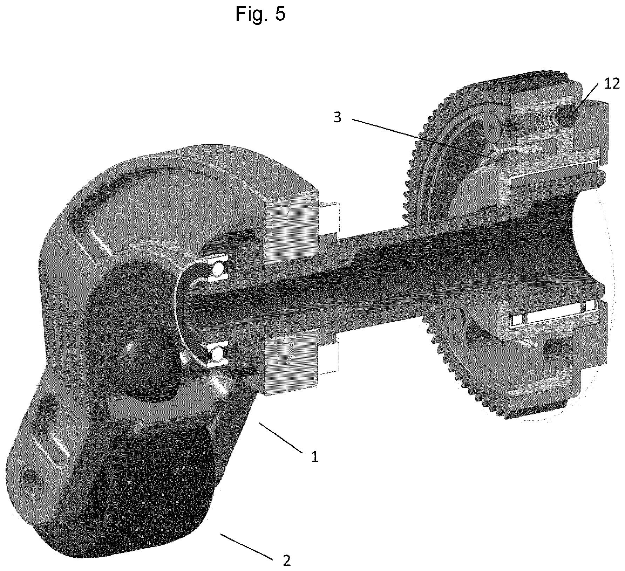

Figur 5 zeigt eine Detailansicht einer Ausführungsform eines Hebelelements 1 mit Kontaktelement 2, hier als Rolle ausgeführt. Über die Achse am ersten Endes des Hebelelementes wird die Kraft auf das Zahnrad übertragen. Letztere überträgt die Kraft auf das mechanische Kopplungselement und eventuell direkt auf einen Generator (nicht gezeigt). Die Freilaufkupplung 3 überträgt die Bewegung des Hebelelementes nur in eine Richtung, der Überlastschutz 12 gewährleistet die Vermeidung der Übertragung zu hoher Kräfte.

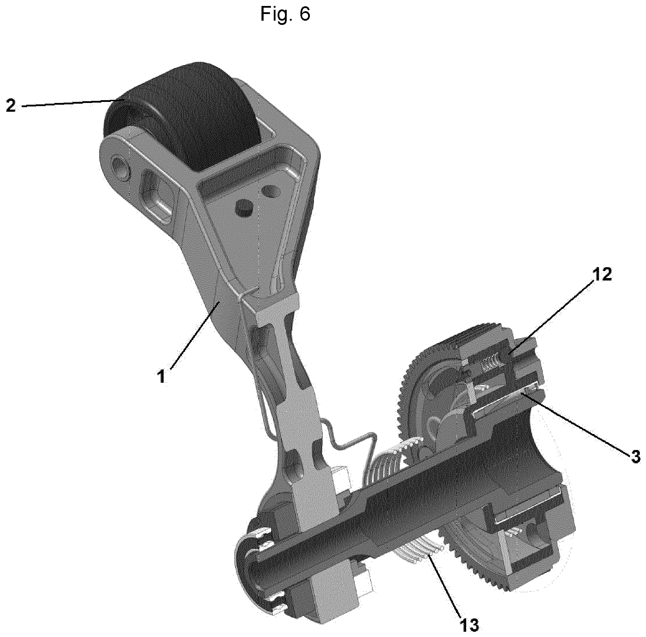

Figur 6 zeigt eine Detailansicht einer Ausführungsform eines Hebelelements 1 mit Kontaktelement 2, hier als Rolle ausgeführt. Über die Achse am ersten Endes des Hebelelementes wird die Kraft auf das Zahnrad übertragen. Letztere überträgt die Kraft auf das mechanische Kopplungselement und eventuell direkt auf einen Generator (nicht gezeigt). Die Freilaufkupplung 3 überträgt die Bewegung des Hebelelementes nur in eine Richtung, der Überlastschutz 12 gewährleistet die Vermeidung der Übertragung zu hoher Kräfte. Eine Feder dient als Vorspannelement 13.

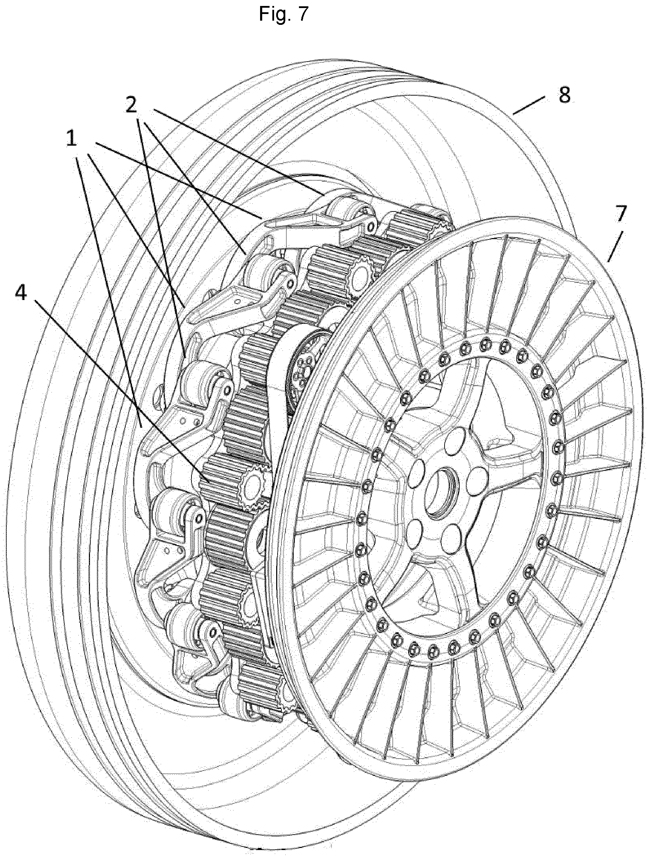

Figur 7 zeigt einen erfindungsgemäßen Wandler integriert in ein Rad mit Reifen 8. Der Wandler umfasst einen Satz Hebelelemente 1 mit jeweils einem Kontaktelement 2 in eingeklapptem Zustand, das heißt eng an dem Bett der Felge 7 anliegend. Das mechanische Kopplungselement 4 ist als Zahnriemen ausgeführt und verbindet alle Antriebswellen der Hebelelemente 1 sowie die Antriebswellen für die Generatoren (nicht gezeigt).

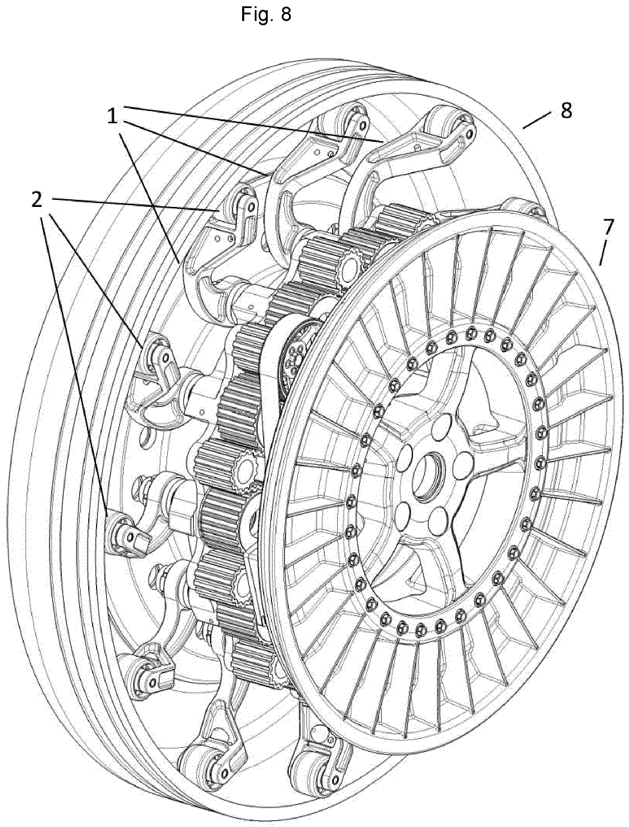

Figur 8 zeigt einen erfindungsgemäßen Wandler integriert in ein Rad mit Reifen 8. Der Wandler umfasst einen Satz Hebelelemente 1 mit jeweils einem Kontaktelement 2 wie in Figur 7, jedoch in ausgefahrenem Zustand, beispielsweise durch dein Einfluss der Fliehkraft bei genügen hoher Rotationsgeschwindigkeit des Rades, das heißt von der Felge 7 weggeklappt. In diesem Zustand sind die Kontaktelemente 2 im Kontakt mit der Reifeninnenseite des Reifens 8. Eine Walkbewegung des Reifens durch Kontakt mit der Fahrbahn führt zu einer entsprechenden Drehbewegung der Hebelelemente. Das mechanische Kopplungselement 4 ist als Zahnriemen ausgeführt und verbindet alle Antriebswellen der Hebelelemente 1 sowie die Antriebswellen für die Generatoren (nicht gezeigt).

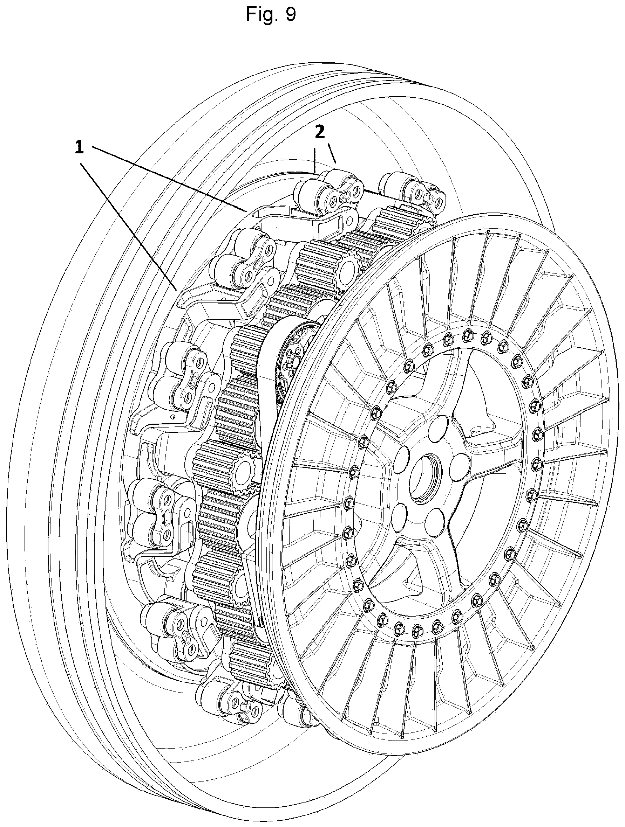

Figur 9 zeigt einen erfindungsgemäßen Wandler integriert in ein Rad. Der Wandler umfasst einen Satz Hebelelemente 1 mit jeweils zwei Kontaktelementen 2 in eingeklapptem Zustand entsprechend Figur 7, das heißt eng an dem Bett der Felge anliegend.

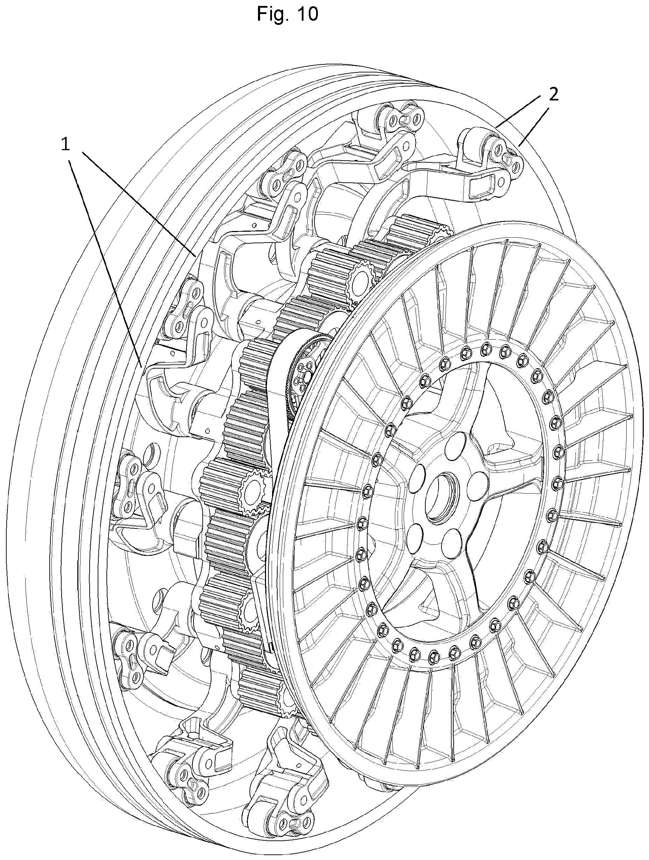

Figur 10 zeigt einen erfindungsgemäßen Wandler integriert in ein Rad. Der Wandler umfasst einen Satz Hebelelemente 1 mit jeweils zwei Kontaktelementen 2 wie in Figur 9, jedoch in ausgefahrenem Zustand (entsprechend Figur 8), beispielsweise durch dein Einfluss der Fliehkraft bei genügen hoher Rotationsgeschwindigkeit des Rades, das heißt von der Felge weggeklappt. In diesem Zustand sind die Kontaktelemente 2 im Kontakt mit der Reifeninnenseite des Reifens. Eine Walkbewegung des Reifens durch Kontakt mit der Fahrbahn führt zu einer entsprechenden Drehbewegung der Hebelelemente.

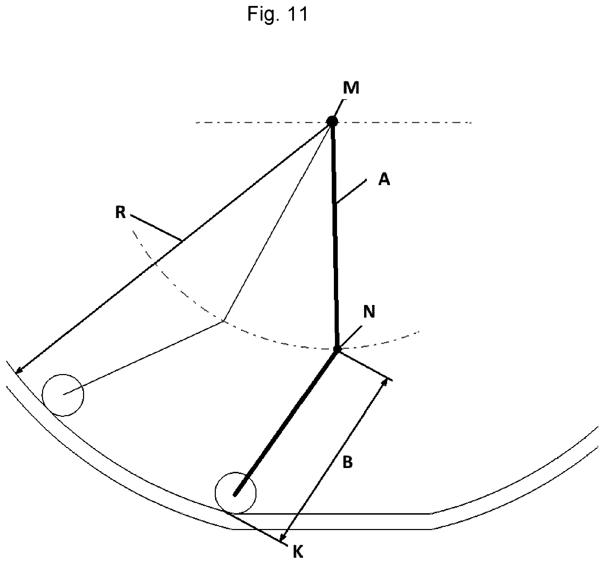

Figur 11 illustriert die Länge A als Distanz der Drehachse des Hebelelementes N von der Radmitte M und die Länge B als den Abstand der Drehachse des Hebelelementes N von der der Kontaktstelle K. Letztere ist die größte Distanz des Kontaktelements von der Drehachse des Hebelelementes N, die in Kontakt mit der Innenseite des Radreifens tritt bzw. treten kann.

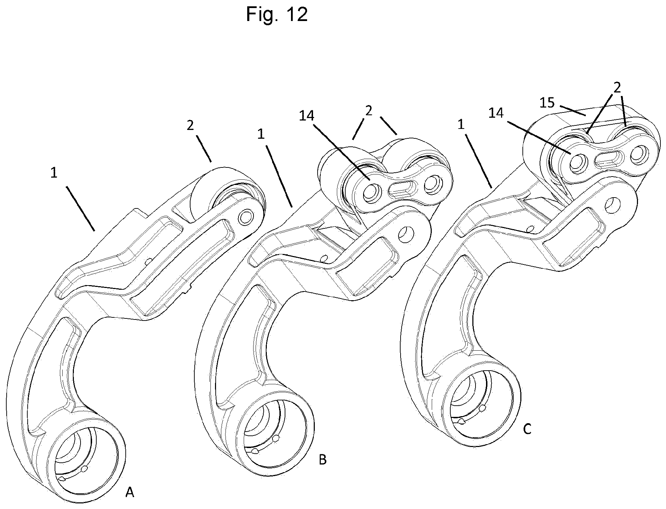

Figur 12 zeigt Detailansichten dreier Ausführungsformen von Hebelelementen 1 mit Kontaktelement(en) 2, hier als Rolle ausgeführt. In der Ausführungsform A trägt das Hebelelement 1 eine Rolle als Kontaktelement 2. In der Ausführungsform B trägt das Hebelelement 1 einen Schlitten 14 (zweiter Teil), der zwei Rollen als Kontaktelemente 2 trägt. In der Ausführungsform C trägt das Hebelelement 1 ebenfalls einen Schlitten 14 (zweiter Teil), der zwei Rollen als Kontaktelemente 2 trägt. Die zwei Rollen als Kontaktelemente 2 werden in der Ausführungsform C von einem Riemen 15 umspannt, der noch über eine weitere am Schlitten gelagerte Rolle (nicht gezeigt) geführt wird.

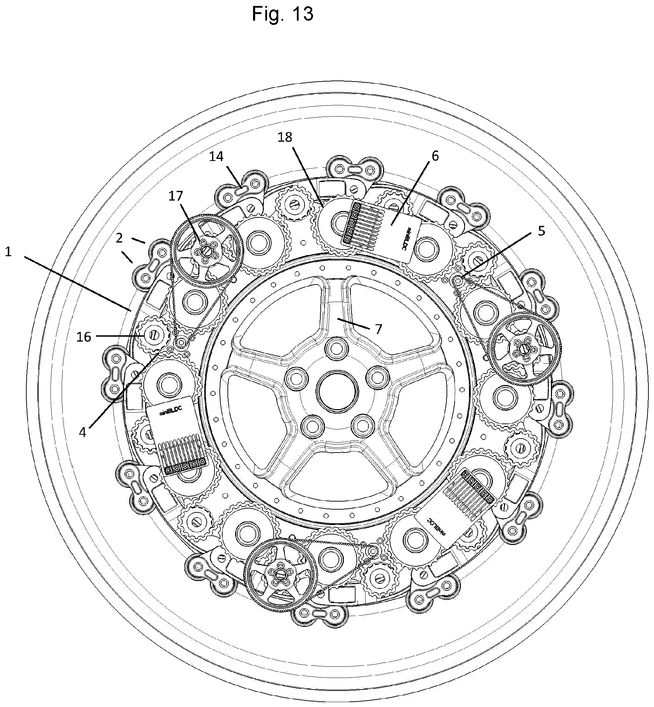

Figur 13 zeigt einen erfindungsgemäßen Wandler integriert in ein Rad mit Reifen. Der Wandler umfasst einen Satz Hebelelemente 1 mit jeweils zwei Kontaktelementen 2, die in einem Schlitten 14 gelagert sind. Die Hebelelemente sind in eingeklapptem Zustand, das heißt eng an dem Bett der Felge 7 anliegend, dargestellt. Das mechanische Kopplungselement 4 ist als Zahnriemen ausgeführt und verbindet alle Antriebswellen der Hebelelemente 1 sowie die Antriebswellen für die Generatoren 5. Der Zahnriemen läuft abwechselnd über Hebelelementantriebsrollen 18 sowie entweder Umlenkrollen 16 oder Generatorantriebsrollen 17. Über die Generatorantriebsrollen 17 werden die Generatoren 5, wiederum über Riemen, angetrieben.

Figur 14 zeigt einen erfindungsgemäßen Wandler integriert in ein Rad mit Reifen 8. Der Wandler umfasst einen Satz Hebelelemente 1 mit jeweils zwei Kontaktelementen 2, die in einem Schlitten 14 gelagert sind. Der Winkel α ist der Winkel, den die Drehachsen zweier benachbarte Hebelelemente (oder wie in der Figur gezeigt, bei gleicher Stellung der Hebelelemente, auch die Drehachsen der Schlitten) bezogen auf die Drehachse des Rades aufspannen. Der Winkel α entspricht somit 360°/n, wobei n die Anzahl der Hebelelemente ist. Der Winkel β ist der Winkel, den die beiden Drehachsen der Kontaktelemente eines Schlittens bezogen auf die Drehachse des Rades aufspannen. Die Hebelelemente sind wie in

Figur 7, jedoch in ausgefahrenem Zustand, beispielsweise durch dein Einfluss der Fliehkraft bei genügen hoher Rotationsgeschwindigkeit des Rades, das heißt von der Felge 7 weggeklappt, dargestellt. In diesem Zustand sind die Kontaktelemente 2 im Kontakt mit der Reifeninnenseite des Reifens 8. Eine Walkbewegung des Reifens durch Kontakt mit der Fahrbahn führt zu einer entsprechenden Drehbewegung der Hebelelemente. Das mechanische Kopplungselement 4 ist als Zahnriemen ausgeführt und verbindet alle Antriebswellen der Hebelelemente 1 sowie die Antriebswellen für die Generatoren 5. Der Zahnriemen läuft abwechselnd über Hebelelementantriebsrollen 18 sowie entweder Umlenkrollen 16 oder Generatorantriebsrollen 17. Über die Generatorantriebsrollen 17 werden die Generatoren 5, wiederum über Riemen, angetrieben.

### Referenzzeichenliste:

- 1: Hebelelement
- 2: Kontaktelement
- 3: Freilaufkupplung
- 4: mechanisches Kopplungselement
- 5: Generator
- 6: Controller
- 7: Felge
- 8: Reifen
- 9: Anschluss für Leistungsabgabe
- 10: Anschlusszahnrad mit Außenverzahnung
- 11: Anschlusszahnrad mit Innenverzahnung
- 12: Überlastschutz
- 13: Vorspannelement
- 14: Schlitten
- 15: Riemen an Kontaktelementen
- 16: Umlenkrolle
- 17: Generatorantriebsrolle
- 18: Hebelelementantriebsrolle

## Patentansprüche

1. Wandler zur Gewinnung von elektrischer Energie in einem rollenden Rad eines Fahrzeugs aus der Verformung des Radreifens durch Kontakt mit der Fahrbahn, umfassend
a) mindestens ein Hebelelement (1), das an seinem ersten Ende drehbar gelagert ist, und an seinem zweiten Ende konfiguriert ist, mit der Innenseite eines Radreifens über mindestens ein Kontaktelement (2) derart in Kontakt zu treten, dass eine Verformung des Radreifens durch Kontakt mit der Fahrbahn eine Drehbewegung des Hebelelements bewirkt,
b) ein mechanisches Kopplungselement (4), das geeignet ist, die durch die Drehbewegung des Hebelelements (1) auftretende Kraft zu übertragen, und
c) mindestens einen elektrischen Generator (5), der konfiguriert ist, die übertragene Kraft in elektrische Energie umzuwandeln,
wobei an dem zweiten Ende des Hebelelements (1) das Kontaktelement (2) derart an dem Hebelelement um eine Rotationsachse drehbar gelagert ist, dass das Kontaktelement (2) den Kontakt des Hebelelements mit dem Radreifen vermittelt, und die Rotationsachse des Kontaktelements (2) im Wesentlichen parallel zur Rotationsachse des Rades verläuft, **dadurch gekennzeichnet, dass** das Verhältnis des Abstands A der Drehachse des Hebelelementes N von der Radmitte M zum Radius der Innenseite des Radreifens R (A/R) im Bereich von 0,55 bis 0,60 liegt und das Verhältnis des Abstand B der Drehachse des Hebelelementes N von der Kontaktstelle K des Kontaktelementes mit der Innenseite des Radreifens, im Falle von mehreren Kontaktelementen pro Hebelelement das mit dem größten Abstand von der Drehachse N, zum Radius der Innenseite des Radreifens R (B/R) im Bereich von 0,44 bis 0,55 liegt, und die Summe (A+B) größer als R ist.

2. Wandler gemäß Anspruch 1, **dadurch gekennzeichnet, dass** der elektrische Generator (5) konfiguriert ist, die durch das mechanische Kopplungselement (4) übertragene Kraft in elektrische Energie umzuwandeln.

3. Wandler gemäß Anspruch 1 oder 2, **dadurch gekennzeichnet, dass** das Kontaktelement (2) ein bezüglich Rotation um seine Drehachse im Wesentlichen rotationssymmetrische Form aufweist, und insbesondere eine Rolle darstellt.

4. Wandler gemäß einem der vorhergehenden Ansprüche, **dadurch gekennzeichnet, dass** das Kontaktelement (2) bezüglich Rotation um seine Drehachse frei drehbar ist.

5. Wandler gemäß einem der vorhergehenden Ansprüche, **dadurch gekennzeichnet, dass** das Kontaktelement (2) bezüglich Rotation um seine Drehachse frei um 360° drehbar ist.

6. Wandler gemäß einem der vorhergehenden Ansprüche, **dadurch gekennzeichnet, dass** die Drehachse N des Hebelelements (1) im Wesentlichen parallel zur Rotationsachse des Rades verläuft.

7. Wandler gemäß einem der vorhergehenden Ansprüche, **dadurch gekennzeichnet, dass** der Wandler mindestens zwei rotationssymmetrisch um die Rotationsachse des Rades angeordnete Hebelelemente (1) aufweist.

8. Wandler gemäß einem der vorhergehenden Ansprüche, **dadurch gekennzeichnet, dass** der Wandler mindestens zwei rotationssymmetrisch um die Rotationsachse des Rades angeordnete elektrische Generatoren (5) aufweist.

9. Wandler gemäß einem der vorhergehenden Ansprüche, **dadurch gekennzeichnet, dass** der bzw. die Hebelelemente (1) die Kraft über eine Freilaufkupplung (3) auf das mechanische Kopplungselement (4) übertragen.

10. Wandler gemäß einem der Ansprüche 7 bis 9, **dadurch gekennzeichnet, dass** alle Hebelelemente (1) die Kraft auf ein gemeinsames mechanisches Kopplungselement (4) übertragen.

11. Wandler gemäß einem der vorhergehenden Ansprüche 8 bis 10, **dadurch gekennzeichnet, dass** das mechanische Kopplungselement (4) derart konfiguriert ist, dass es die durch die Hebelelemente (1) erfahrene Kraft auf alle elektrischen Generatoren (5) übertragen kann.

12. Wandler gemäß einem der vorhergehenden Ansprüche, **dadurch gekennzeichnet, dass** das mechanische Kopplungselement (4) einen Ring mit Außen- oder Innenverzahnung, eine Kette oder einen Riemen, insbesondere einen Zahnriemen, umfasst.

13. Wandler gemäß einem der vorhergehenden Ansprüche, **dadurch gekennzeichnet, dass** der Wandler weiterhin ein Vorspannmittel für die Hebelelemente (1) aufweist, das die Drehung der Hebelelemente (1) um ihr erstes Ende mit einer Kraft in die durch die Verformung des Radreifens durch Kontakt mit der Fahrbahn verursachte Drehbewegung der Hebelelemente vorspannt.

14. System zur Gewinnung von elektrischer Energie in einem rollenden Rad eines Fahrzeugs aus der Verformung des Radreifens durch Kontakt mit der Fahrbahn, umfassend einen Wandler gemäß einem der vorhergehenden Ansprüche sowie eine Radfelge als Trägerstruktur.

15. Fahrzeug oder Rad umfassend ein System nach Anspruch 14.

## Claims

1. Transducer for obtaining electrical energy in a rolling
wheel of a vehicle from the deformation of the wheel tyre by contact with the roadway, comprising
a) at least one lever element (1) which is rotatably mounted at its first end and at its second end is configured to come into contact with the inside of a wheel tyre via at least one contact element (2) in such a way that a deformation of the wheel tyre due to contact with the roadway causes a rotational movement of the lever element,
b) a mechanical coupling element (4), which is suitable for transmitting the force generated by the rotational movement of the lever element (1), and
c) at least one electrical generator (5) configured to convert the transmitted power into electrical energy,
wherein at the second end of the lever element (1) the contact element (2) is rotatably mounted on the lever element about a rotational axis in such a way that the contact element (2) facilitates the contact of the lever element with the wheel tyre, and the rotational axis of the contact element (2) runs substantially parallel to the rotational axis of the wheel, **characterised in that** the ratio of the distance A of the axis of rotation of the lever element N from the wheel centre M to the radius of the inside of the wheel tyre R (A/R) is in the range of 0.55 to 0.60 and the ratio of the distance B of the axis of rotation of the lever element N from the contact point K of the contact element with the inside of the wheel tyre, in the case of a plurality of contact elements per lever element the one with the greatest distance from the axis of rotation N, to the radius of the inside of the wheel tyre R (B/R) is in the range of 0.44 to 0.55, and the sum (A+B) is greater than R.

2. Transducer according to Claim 1, **characterised in that** the electrical generator (5) is configured to convert the power transmitted by the mechanical coupling element (4) into electrical energy.

3. Transducer according to Claim 1 or 2, **characterised in that** the contact element (2) has a shape substantially rotationally symmetrical with respect to rotation about its axis of rotation, and in particular constitutes a roller.

4. Transducer according to one of the preceding claims, **characterised in that** the contact element (2) is freely rotatable with respect to rotation about its axis of rotation.

5. Transducer according to one of the preceding claims, **characterised in that** the contact element (2) is freely rotatable through 360° with respect to rotation about its axis of rotation.

6. Transducer according to one of the preceding claims, **characterised in that** the axis of rotation N of the lever element (1) runs substantially parallel to the rotational axis of the wheel.

7. Transducer according to one of the preceding claims, **characterised in that** the transducer has at least two lever elements (1) arranged rotationally symmetrically about the rotational axis of the wheel.

8. Transducer according to one of the preceding claims, **characterised in that** the transducer has at least two electrical generators (5) arranged rotationally symmetrically about the rotational axis of the wheel.

9. Transducer according to one of the preceding claims, **characterised in that** the lever element or elements (1) transmit(s) the force to the mechanical coupling element (4) via a one-way clutch (3).

10. Transducer according to one of Claims 7 to 9, **characterised in that** all of the lever elements (1) transmit the force to a common mechanical coupling element (4).

11. Transducer according to one of the preceding claims 8 to 10, **characterised in that** the mechanical coupling element (4) is configured in such a way that it can transmit the force experienced by the lever elements (1) to all electrical generators (5).

12. Transducer according to one of the preceding claims, **characterised in that** the mechanical coupling element (4) comprises a ring with external or internal toothing, a chain or a belt, in particular a toothed belt.

13. Transducer according to one of the preceding claims, **characterised in that** the transducer further has a prestressing means for the lever elements (1), which prestresses the rotation of the lever elements (1) about their first end with a force into the rotational movement of the lever elements caused by the deformation of the wheel tyre due to contact with the roadway.

14. System for obtaining electrical energy in a rolling wheel of a vehicle from the deformation of the wheel tyre by contact with the roadway, comprising a transducer according to any one of the preceding claims and a wheel rim as a support structure.

15. Vehicle or wheel comprising a system according to Claim 14.

## Revendications

1. Convertisseur pour générer de l'énergie électrique dans une roue en cours de roulement d'un véhicule à partir de la déformation du pneu de roue par contact avec la chaussée, comprenant
a) au moins un élément de levier (1) qui est monté à rotation à sa première extrémité et qui est configuré à sa deuxième extrémité pour entrer en contact avec le côté intérieur d'un pneu de roue par l'intermédiaire d'au moins un élément de contact (2) de telle sorte qu'une déformation du pneu de roue par contact avec la chaussée provoque un mouvement de rotation de l'élément de levier,
b) un élément de couplage mécanique (4) qui est approprié pour transmettre la force produite par le mouvement de rotation de l'élément de levier (1), et
c) au moins un générateur électrique (5) configuré pour convertir la force transmise en énergie électrique,
l'élément de contact (2) étant monté à la deuxième extrémité de l'élément de levier (1) de manière à pouvoir tourner sur l'élément de levier autour d'un axe de rotation de telle sorte que l'élément de contact (2) assure le contact de l'élément de levier avec le pneu de la roue, et l'axe de rotation de l'élément de contact (2) étant sensiblement parallèle à l'axe de rotation de la roue, **caractérisé en ce que** le rapport entre la distance A de l'axe de rotation de l'élément de levier N par rapport au centre de la roue M et le rayon du côté intérieur du pneu de roue R (A/R) est compris entre 0,55 à 0,60 et le rapport de la distance B de l'axe de rotation de l'élément de levier N au point de contact K de l'élément de contact avec le côté intérieur du pneu de roue, dans le cas de plusieurs éléments de contact par élément de levier, celui qui est le plus éloigné de l'axe de rotation N, au rayon du côté intérieur du pneu de roue R (B/R) est compris entre 0,44 et 0,55, et la somme (A+B) est supérieure à R.

2. Convertisseur selon la revendication 1, **caractérisé en ce que** le générateur électrique (5) est configuré pour convertir la force transmise par l'élément de couplage mécanique (4) en énergie électrique.

3. Convertisseur selon la revendication 1 ou 2, **caractérisé en ce que** l'élément de contact (2) présente une forme sensiblement à symétrie de révolution par rapport à la rotation autour de son axe de rotation, et constitue en particulier un rouleau.

4. Convertisseur selon l'une des revendications précédentes, **caractérisé en ce que** l'élément de contact (2) est libre en rotation autour de son axe de rotation.

5. Convertisseur selon l'une des revendications précédentes, **caractérisé en ce que** l'élément de contact (2) est libre de tourner de 360° en rotation autour de son axe de rotation.

6. Convertisseur selon l'une des revendications précédentes, **caractérisé en ce que** l'axe de rotation N de l'élément de levier (1) est sensiblement parallèle à l'axe de rotation de la roue.

7. Convertisseur selon l'une des revendications précédentes, **caractérisé en ce que** le convertisseur comporte au moins deux éléments de levier (1) disposés à symétrie de révolution autour de l'axe de rotation de la roue.

8. Convertisseur selon l'une des revendications précédentes, **caractérisé en ce que** le convertisseur comporte au moins deux générateurs électriques (5) disposés à symétrie de révolution autour de l'axe de rotation de la roue.

9. Convertisseur selon l'une des revendications précédentes, **caractérisé en ce que** le ou les éléments de levier (1) transmettent la force à l'élément de couplage mécanique (4) par l'intermédiaire d'un embrayage à roue libre (3).

10. Convertisseur selon l'une des revendications 7 à 9, **caractérisé en ce que** tous les éléments de levier (1) transmettent la force à un élément de couplage mécanique commun (4).

11. Convertisseur selon l'une des revendications précédentes 8 à 10, **caractérisé en ce que** l'élément de couplage mécanique (4) est configuré de manière à pouvoir transmettre la force subie par les éléments de levier (1) à tous les générateurs électriques (5).

12. Convertisseur selon l'une des revendications précédentes, **caractérisé en ce que** l'élément de couplage mécanique (4) comprend une bague à denture extérieure ou intérieure, une chaîne ou une courroie, notamment une courroie crantée.

13. Convertisseur selon l'une des revendications précédentes, **caractérisé en ce que** le convertisseur comprend en outre un moyen de sollicitation des éléments de levier (1) qui sollicite la rotation des éléments de levier (1) autour de leur première extrémité avec une force dans le mouvement de rotation des éléments de levier provoqué par la déformation du pneu de roue par contact avec la chaussée.

14. Système de génération d'énergie électrique dans une roue en cours de roulement d'un véhicule à partir de la déformation du pneu de roue par contact avec la chaussée, comprenant un convertisseur selon l'une des revendications précédentes ainsi qu'une jante de roue comme structure de support.

15. Véhicule ou roue comprenant un système selon la revendication 14.
